# EUROPÄISCHE PATENTSCHRIFT

(11) **EP 0 587 062 B1**
(45) Veröffentlichungstag und Bekanntmachung des Hinweises auf die Patenterteilung: **30.07.1997**
(21) Anmeldenummer: 93114129.5
(22) Anmeldetag: 03.09.1993
(51) Int. Cl.: C09D 5/34, C09D 109/06, C08F 279/02

(54) **Wässrige Spachtelmassen, sowie Verfahren zur Mehrschichtlackierung unter deren Verwendung**
Aqueous filling pastes and process for the preparation of multilayered coating using them
Enduits aqueux et procédé de préparation de revêtement multicouche en utilisant ceux-ci

(30) Priorität: 08.09.1992 DE 4229983
(43) Veröffentlichungstag der Anmeldung: 16.03.1994
(73) Patentinhaber: Herberts Gesellschaft mit beschränkter Haftung, 42285 Wuppertal (DE)
(72) Erfinder: Nawotka, Otfried, D-42109 Wuppertal (DE)
(74) Vertreter: Türk, Gille, Hrabal, Leifert

(56) Entgegenhaltungen:
- EP-A- 0 170 184
- EP-A- 0 238 108
- EP-A- 0 534 322
- DE-A- 2 754 733
- GB-A- 2 048 898

## Beschreibung

Die Erfindung betrifft wäßrige Spachtelmassen, sowie Verfahren zur Mehrschichtlackierung unter Verwendung dieser Spachtelmassen. Sie sind insbesondere zur Lackierung von Kraftfahrzeugen, im industriellen Fahrzeugbau sowie im Maschinenbau verwendbar.

Spachtelmassen werden in der Industrie eingesetzt, um uneinheitliche und unebene Untergründe abzudecken und eine homogene Basisschicht zu erzeugen. Die ausgehärteten Massen werden auch mechanisch belastet, es ist deshalb notwendig, daß die Spachtelmaterialien eine gute Haftung zum Untergrund und den nachfolgenden Lackschichten besitzen. Eine weitere Anforderung besteht darin, daß die Materialien in dicker Schicht aufgetragen werden können und dabei auf dem Substrat gut zu verarbeiten sind, z.B. eine gute Ziehbarkeit aufweisen. Dabei ist außerdem auf eine gute und schnelle Durchhärtung zu achten. Als weitere Notwendigkeit ist die Schleifbarkeit zu beachten, das heißt nach dem Auftragen und Aushärten der Überzugsschicht der Spachtelmasse muß die Oberfläche durch Schleifen zu bearbeiten sein. Es soll eine gute optische Erscheinung erzielt werden.

Als Bindemittel für solche Spachtelmassen sind lösemittelhaltige und lösemittelfreie physikalisch trocknende oder oxidativ trocknende Bindemittel bekannt. Diese werden durch Vermischen mit Pigmenten, Füllstoffen, organischen Lösungsmitteln sowie weiteren Additiven und nachfolgendes Dispergieren auf speziellen Aggregaten hergestellt. Als Bindemittel sind ungesättigte Polyester, die durch Peroxide härten können, bekannt (Glasurit-Handbuch "Lacke und Farben", 11. Auflage, S. 530 f, Hannover 1984). Die entstehenden Spachtelmassen besitzen einen hohen Lösungsmittelanteil. Durch den hohen Lösungsmittelgehalt zeigen die entstehenden Überzugsmittel eine gute Verarbeitbarkeit. Dabei gehen die Lösungsmittel in die Umgebungsluft über. Insbesondere bei styrolhaltigen Spachtelmassen treten besondere Gefährdungen auf. Die Verwendung von lösungsmittelhaltigen Überzugsmitteln steht wegen der Gesundheits- und Umweltbelastungen in der Kritik.

Es sind bereits Versuche unternommen worden, die Lösungsmittelemission zu reduzieren. So werden in DE-0S 40 28 628 ungesättigte Polyesterharzmassen mit einem speziellen wachsartigen Additiv beschrieben, welche eine verringerte Styrolemission aufweisen sollen. Diese Spachtelmassen zeigen aber immer noch einen starken Geruch nach Styrol.

In EP-A 0 310 972 sind beispielsweise radikalisch härtbare Mischungen für Spachtel auf Basis ungesättigter Polyesterharze beschrieben, wobei die Mischungen neben üblichen Kondensationsprodukten von ungesättigten Carbonsäuren mit Ethylen- oder Propylenglykol zusammen mit Styrol, als Haftvermittler einen Acryloylgruppen enthaltenden Polyester enthalten. Diese Produkte sind immer noch styrolhaltig.

Wäßrige Spachtelmassen sind in der Praxis nicht für Metallsubstrate bekannt. Durch Wasser als Lösungsmittel wurde bisher die Viskosität der Produkte negativ beeinflußt, die Pigmente sedimentierten leicht und die Lagerstabilität war nicht gegeben. Außerdem bestand die Gefahr, daß eine Rostbildung besonders auf Eisensubstraten eintrat.

In der Patentveröffentlichung JP 62 241 901 wird ein selbstdispergierendes wasserlösliches Harzsystem für die Verwendung in Klebstoffen beschrieben. Das Harzsystem enthält Anteile von Monomeren mit polymerisierbaren Doppelbindungen und salzbildenden Gruppen sowie weitere Anteile damit polymerisierbarer Monomerer mit Doppelbindungen. Die Polymerisation erfolgt in einem organischen hydrophilen Lösungsmittel. Anschließend wird neutralisiert und durch Wasserzusatz und Entfernen des organischen Lösungsmittels in die wäßrige Phase überführt. Es wird keine spezielle Zusammensetzung der Bindemitteldispersion für Spachtelmassen für nicht saugenden Untergrund beschrieben.

Die ältere, nicht vorveröffentlichte Patentschrift EP-A-0 534 322 beschreibt ein wasserverdünnbares, olefinisch ungesättigtes Bindemittel, das als wäßriges Überzugsmittel, Grundierungsmittel oder Füllermasse verwendet werden kann. In EP-A-0 238 108 werden wäßrige Dispersionen von Additionspolymeren und darauf basierende Überzugsmittelzusammensetzungen beschrieben, die einen Dispersionsstabilisator enthält, der aus der Copolymerisation olefinisch ungesättigter Verbindungen in Gegenwart von 1,3 Butadien erhalten wird. In EP-A-0 170 184 wird ein Verfahren zur Herstellung sikkativierter wäßriger Lacke mit Polybutadien-Maleinsäureanhydrid-Addukten als Bindemittel beschrieben. Die DE-A-27 54 733 betrifft ein Verfahren zur Herstellung eines in Wasser dispergierbaren filmbildenden Materials, wobei ein Monomeres mit einer Radikal - polymerisierbaren olefinisch ungesättigten Gruppe mit einem Butadienpolymer in wäßriger Lösung pfropfpolymerisiert wird, wobei das Butadienpolymerisat kationische Amingruppen enthält.

Aufgabe der Erfindung ist es, deshalb, ein Verfahren zur Mehrschichtlackierung bereitzustellen, bei der Spachtelmassen eingesetzt werden, die eine gute Verarbeitbarkeit aufweisen, eine schnelle Trocknung auch bei Umgebungstemperatur zeigen, nach der Härtung eine gute Schleifbarkeit besitzen und nur geringe Anteile von organischen Lösungsmitteln enthalten. Weiterhin soll eine gute Lagerstabilität gegeben sein.

Es hat sich gezeigt, daß diese Aufgabe gelöst werden kann durch das erfindungsgemäße Verfahren zur Mehrschichtlackierung durch Auftrag einer Spachtelmasse auf ein Substrat, das bereits eine oder mehrere Überzugsschichten aufweisen kann, Trocknen und anschließenden Auftrag einer oder mehrerer Überzugsschichten, dadurch gekennzeichnet, daß man eine wäßrige Spachtelmasse aufträgt, die mindestens ein wasserverdünnbares olefinisch ungesättigtes Bindemittel, übliche Pigmente, Füllstoffe und Additive, entsprechend einem Festkörpergehalt von
60-85 Gew.-%, mit Ausnahme von 60 Gew.-%,
15-35 Gew.-% Wasser und
0-5 Gew.-% eines oder mehrerer organischer Lösemittel, enthält,
worin das Pigment-Füllstoff Bindemittel-Verhältnis 0,5 bis 12,5 : 1, ausgenommen 0,5 bis 1,5 : 1, bezogen auf das Festkörpergewicht beträgt und worin die wasserverdünnbaren olefinisch ungesättigten Bindemittel anionische Gruppen oder in anionische Gruppen überführbare Gruppen, entsprechend einer Säurezahl von 25-175 aufweisen und Umsetzungsprodukte sind von
A) 40 - 80 Gew.-% eines oder mehrerer Polydienöle,
B) 5 - 25 Gew.-% eines oder mehrerer anionische Gruppen oder in anionische Gruppen überführbare Gruppen enthaltender polymerisierbarer olefinisch ungesättigter Monomerer,
C) 0 - 10 Gew.-% eines oder mehrerer Bis-(2-oxazoline) und
D) 0 - 40 Gew.-% eines oder mehrerer ethylenisch ungesättigter Monomerer,
wobei sich die Gew.-% von A), B), C) und D) auf 100 Gew.-% addieren.

Bevorzugt werden in dem erfindungsgemäßen Verfahren wäßrige Spachtelmassen eingesetzt, worin die ethylenisch ungesättigten Monomeren der Komponente D Vinyl-, Vinyliden-, Acryl- oder Methacrylverbindungen sind. Weiterhin ist es bevorzugt, in dem erfindungsgemäßen Verfahren eine wäßrige Spachtelmasse einzusetzen, die dadurch gekennzeichnet ist, daß das Bindemittel ringgeöffnete Bis-(2-oxazoline) enthält.

Einen weiteren Gegenstand der Erfindung bildet die Verwendung einer wäßrigen Zusammensetzung, die mindestens ein wasserverdünnbares olefinisch ungesättigtes Bindemittel, übliche Pigmente, Füllstoffe und Additive, entsprechend einem Festkörpergehalt von
60-85 Gew.-%, mit Ausnahme von 60 Gew.-%,
15-35 Gew.-% Wasser und
0-5 Gew.-% eines oder mehrerer organischer Lösemittel, enthält,
worin das Pigment-Füllstoff Bindemittel-Verhältnis 0,5 bis 12,5 : 1, ausgenommen 0,5 bis 1,5 : 1, bezogen auf das Festkörpergewicht beträgt und worin die wasserverdünnbaren olefinisch ungesättigten Bindemittel anionische Gruppen oder in anionische Gruppen überführbare Gruppen, entsprechend einer Säurezahl von 25-175 aufweisen und Umsetzungsprodukte sind von
A) 40 - 80 Gew.-% eines oder mehrerer Polydienöle,
B) 5 - 25 Gew.-% eines oder mehrerer anionische Gruppen oder in ; anionische Gruppen überführbare Gruppen enthaltender polymerisierbarer olefinisch ungesättigter Monomerer,
C) 0 - 10 Gew.-% eines oder mehrerer Bis-(2-oxazoline) und
D) 0 - 40 Gew.-% eines oder mehrerer ethylenisch ungesättigter Monomerer,
wobei sich die Gew.-% von A), B), C) und D) auf 100 Gew.-% addieren, als Spachtelmasse.

Die Spachtelmasse enthält wasserverdünnbare Bindemittel auf Basis von Polymerisaten von olefinisch ungesättigten Monomeren. Solche Bindemittel und ihre Herstellung sind beispielsweise in der EP-A 0 268 035, EP-A 0 238 108, P 41 32 077 und der EP-A 0 170 184 beschrieben.

Es handelt sich um wasserverdünnbare Bindemittel auf der Basis von Polydienölen, sowie weiteren ethylenisch ungesättigten copolymerisierbaren Monomeren. Zumindest ein Teil der Monomeren, nämlich die Komponente B) trägt anionische Gruppen oder in anionische Gruppen überführbare Gruppen. Die Bindemittel haben bevorzugt eine zahlenmittlere Molmasse (Mₙ) von 300 bis 50000 g/Mol, besonders bevorzugt von 1000 bis 10000 g/Mol. Die Säurezahl liegt bei 25 bis 175, bevorzugt bei 50 bis 150.

Als Komponente A) werden bevorzugt mehr als 40 Gew.-%, besonders bevorzugt mehr als 50 Gew.-%, Polydienöl eingesetzt. Die obere Grenze liegt bevorzugt unter 80 Gew.-%, insbesondere bevorzugt unter 70 Gew.-%.

Bevorzugte Polydienöle sind Polydiene mit einem Zahlenmittel der Molmasse (Mₙ) von 300 bis 5000, bevorzugt 1000 bis 3000, und Viskositäten von 500 - 5000 mPa.s (bei 20°C), einer Jodzahl von 200 - 500 g Jod/100 g Substanz und sie weisen bevorzugt 1,4-cis- und/oder 1,4-trans-Verknüpfungen auf. Es handelt sich um dem Fachmann geläufige handelsübliche Produkte. Beispiele sind Polybutadienöle verschiedener Konfiguration oder Polypentadienöle. Es können auch Mischungen solcher Polydienöle, z.B. Mischungen von Polybutadienölen mit verschiedener Molmasse sowie unterschiedlicher Konfiguration und/oder auch von Polypentadienölen, verwendet werden. Bevorzugt werden Polybutadienöle mit mehr als 60 % 1,4 cis-Anteil und möglichst niedrigem 1,2-Vinylgruppengehalt (bevorzugt unter 5 %), wobei sich die Prozentangaben jeweils auf die Anzahl der vorhandenen Doppelbindungen beziehen.

Diese Polydienöle können durch Polymerisation von Dienmonomeren, wie Butadien und Pentadien hergestellt werden. Diese können z.B. mit bis zu 25 Gew.-% eines oder mehrerer copolymerisierbarer Monomerer, bezogen auf die gesamten Monomeren, copolymerisiert sein. Beispiele für Comonomere sind Styrol, Methylstyrol, Vinyltoluol, (Meth)Acrylsäure, Vinylessigsäure, Maleinsäure sowie Derivate, z.B. Ester der genannten Säuren und deren Mischungen. Beispiele für solche Polydienöle sind Butadiencopolymerisate, die bis zu 25 Gew.-% anderer Comonomerer, wie sie vorstehend angegeben wurden, einpolymerisiert enthalten.

Als Komponente B werden ethylenisch ungesättigte copolymerisierbare Monomere eingesetzt, die anionische Gruppen oder in anionische Gruppen überführbare Substituenten enthalten. Beispiele für solche Gruppen sind anionische Gruppen wie - SO₃H, -PO₃H oder -COOH. Bevorzugt sind Carboxylgruppen sowie deren Anhydride.

Bevorzugte Beispiele sind α,β-ethylenisch ungesättigte Mono- bzw. Dicarbonsäuren, Acrylsäure, Methacrylsäure, Itaconsäure, Maleinsäure, Fumarsäure oder deren Mischungen oder Anhydride. Besonders bevorzugt eingesetzt wird Maleinsäureanhydrid und/oder Itaconsäureanhydrid.

Als Komponente B werden mindestens 5, bevorzugt mehr als 8 Gew.-% α,β-ungesättigte Carbonsäure eingesetzt. Die obere Grenze liegt bei 25 Gew.-%, bevorzugt unter 22 Gew.-%.

Werden Säureanhydride eingesetzt, können diese durch Umsetzung mit Wasser oder Monoalkoholen oder Monoaminen zu gruppenhaltigen Verbindungen aufgespalten werden. Beispiele für solche Alkohole sind niedere lineare Monoalkohole, wie Methanol, Ethanol, Propanol, Butanol, Cyclohexanol oder Methoxypropanol.

Die Herstellung der Addukte aus Polydienöl (A) und α,β-ungesättigte ionische Gruppen enthaltenden Monomeren (B), z.B. ungesättigten Carbonsäuren, kann nach bekannten Methoden erfolgen. Beispielsweise werden Mischungen der Komponenten 1 bis 4 Stunden auf Temperaturen von beispielsweise 150 bis 250°C erwärmt, gegebenenfalls unter Zusatz von 0,01 bis 0,5 Gew.-%, bezogen auf die Summe der Gewichte von A) und B), eines oder mehrerer Polymerisationsinhibitoren, wie z.B. Hydrochinon, Benzochinon, substituierte Diphenylamine oder Thioverbindungen, wie Mercaptobenzimldazol. Es kann beispielsweise unter Überleiten eines Inertgasstromes gearbeitet werden, gegebenenfalls können geringe Menge aromatischer Lösungsmittel zugesetzt werden.

Bei der Umsetzung der Komponente A) mit der Komponente B) kann in inerten Lösungsmitteln gearbeitet werden. Bevorzugt werden solche Lösungsmittel, die auch später in der Spachtelmasse keine störende Wirkung entfalten.

Wird ein Addukt aus der Komponente A) mit einer α,β-ungesättigten Dicarbonsäure oder deren Anhydrid hergestellt, kann dieses bevorzugt durch eine Verbindung mit einer Aminogruppe partiell amidiert werden, wobei Anhydridgruppen aufgespalten werden. Diese partielle Amidierung kann nach üblichen Verfahren durchgeführt werden. Beispielsweise wird das Addukt mit der aminogruppenhaltigen Verbindung, gegebenenfalls in Gegenwart von inerten Lösungsmitteln, bei erhöhten Temperaturen von beispielsweise 30 bis 150°C, gegebenenfalls in Gegenwart eines Inhibitors und/oder eines Katalysators, umgesetzt.

Unter partieller Amidierung des mit einer α,β-ungesättigten Dicarbonsäure umgesetzten Polydienöls, beispielsweise eines maleinisierten Polybutadienöls, wird die ringöffnende Reaktion an bevorzugt 10 bis 90 Molprozent der vorhandenen Anhydridgruppen des Produkts verstanden.

Bevorzugt einsetzbare Amine sind sekundäre und/oder primäre Amine. Besonders bevorzugt sind sekundäre Monoamine, insbesondere Dialkylamine, wie Diethylamin, Diisopropylamin, Dibutylamin oder Diethanolamin. Es können auch Mischungen eingesetzt werden.

Wie erwähnt, können die Umsetzungsprodukte aus A) und B) mit der Komponente C) umgesetzt werden. Als Komponente C) können bis zu 10 Gew.-% Bis-(2-oxazolin), bevorzugt weniger als 5 Gew.-%, eingesetzt werden.

Die Bis-(2-oxazolin)-Derivate sind durch die allgemeine Formel charakterisiert: 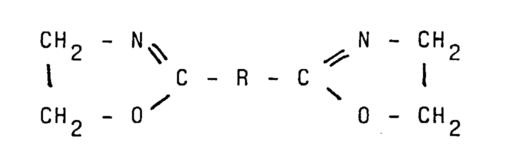 wobei R ein zweiwertiger linearer oder verzweigter Alkyl-, Cycloalkyl- oder gegebenenfalls substituierter Arylrest, insbesondere ein Phenylrest, ist. Bevorzugte Bis-(2-oxazolin)-Derivate sind z.B. 1,3-Phenylen-bis(2-oxazolin), 1,4-Phenylen-bis(2-oxazolin) und 1,4-Cyclohexyl-bis-(2-oxazolin).

Durch die Reaktion von Carbonsäuregruppen enthaltenden, gegebenenfalls partiell amidierten Umsetzungsprodukten aus den Komponenten A) und B) mit Bisoxazolinen wird eine Erhöhung der Molmasse erreicht. Beim Einsatz von äquimolaren Mengen an Bis-2-oxazolinen und Carbonsäuregruppen entstehen lineare Polyesteramide.

Die eingesetzten Bindemittel sind Umsetzungsprodukte aus A) und B), sowie gegebenenfalls C) und/oder D). Bevorzugt werden zunächst die Komponenten A) und B) zur Reaktion gebracht, worauf weiter mit den Komponenten C) und/oder anschließend mit D) umgesetzt bzw. gepfropft werden kann.

Nach der Umsetzung von A) und B) oder nach der Umsetzung von A), B) und C), können ein oder mehrere ethylenisch α,β-ungesättigte Monomere als Komponente D) zur Reaktion gebracht werden bzw. aufgepfropft werden.

Bevorzugte Monomere sind solche, die wenigstens eine radikalisch polymerisierbare ethylenische Doppelbindung besitzen. Beispiele sind Vinyl-, Vinyliden-, Acryl- und Methacrylverbindungen, wie Styrol, α-Hethylstyrol, Vinyltoluol; Acrylsäure- und Methacrylsäureester von C₁-C₁₂-Alkoholen, die linear, verzweigt oder cyclisch sein können; Allylacrylat, Allylmethacrylat, Methacrylsäure, Acrylamid und Mischungen dieser Monomeren. Bevorzugt werden harte Monomere ohne weitere funktionelle Gruppen, das heißt mit einer Glasübergangstemperatur der daraus herstellbaren Homopolymeren von 25 bis 200°C. Besonders bevorzugt wird die Reaktion mit Styrol.

Erfindungsgemäß hängt die gewählte Menge der Monomeren D) von der Art der Monomeren ab. Sie liegt jedoch vorzugsweise bei 1 bis 40 Gew.-%, bezogen auf die Menge des zu pfropfenden, gegebenenfalls teilweise amidierten und esteramidierten Produkts, besonders bevorzugt über 10 und unter 35 Gew.-%.

Das aus den vorher genannten Ausgangsstoffen A), B) und gegebenenfalls C) und/oder D) hergestellte Addukt ist in Wasser nicht dispergierbar. Um es mit Wasser verdünnbar zu machen, werden die ionischen Gruppen des Addukts zumindest teilweise neutralisiert. Eine derartige Neutralisation soll zwischen 15 bis 100 %, bevorzugt 20 bis 80 %, der ionischen Gruppen erfassen. Beispiele für Neutralisationsmittel von sauren Gruppen sind die nachstehend aufgeführten Amine und weiteren Neutralisationsmittel.

Weiterhin können zur Herstellung einer stabilen Dispersionen die gegebenenfalls vorhandenen Anhydridgruppen in Anwesenheit von tertiären, sekundären oder primären Aminen wie Methylamin, Ethylamin, Propyl-amin, Dimethylamin, Diethylamin, Dipropylamin, Trimethylamin, Triethylamin und Triethanolamin mit Wasser hydrolisiert und die freien Carboxygruppen neutralisiert werden. Als basische Verbindungen, die für eine derartige Neutralisation verwendet werden können, eignen sich neben den genannten Aminen auch Ammoniak, Alkalimetall - (z.B. Lithium-, Natrium- und Kalium) -hydroxide, -oxide, -carbonate und/oder -hydrogencarbonate.

Erfindungsgemäß wird die Pfropfreaktion mit den polymerisierbaren ethylenisch ungesättigten Monomeren D) auf dem schon polymeranalog modifizierten Polybutadienöl bevorzugt auf die gleiche Weise durchgeführt, wie es bei der Emulsionspolymerisation von polymerisierbaren Vinylmonomeren üblich ist, das heißt durch Umsetzen des neutralisierten, vorstehend erwähnten Produkts aus A), B) und gegebenenfalls C), mit den radikalisch polymerisierbaren ethylenisch ungesättigten Monomeren D) in Gegenwart eines radikalbildenden Polymerisationsinitiators, beispielsweise bei 10 bis 120°C in wäßriger Emulsion, gegebenenfalls unter Druck. Als merisationsinitiatoren finden z.B. Anwendung Azoverbindunwie 2,2'-Azo-bis(isobutyronitril), und übliche Peroxide wie tertiäres Butylperoxybenzoat oder Butylperoxy-2-ethylhexanoat oder Hydroperoxide.

Bei der Herstellung der Bindemittel wird bevorzugt so gearbeitet, daß zunächst die Komponenten A) bis C) jeweils nacheinander ohne Wasserzusatz umgesetzt werden. Die weitere Umsetzung mit den Monomeren D) erfolgt bevorzugt in wäßriger Phase nach Zusatz von Wasser, Neutralisationsmittel und gegebenenfalls weiteren Hilfsmitteln, die vor dem Eindispergieren zugesetzt werden.

Zusätzlich zu den Umsetzungsprodukten der Komponenten A bis D kann das Bindemittel noch weitere Harze enthalten. Es handelt sich dabei bevorzugt um physikalisch trocknende Harze. Von solchen zusätzlichen Bindemitteln werden bevorzugt weniger als 20 Gew.-%, besonders bevorzugt unter 15 Gew.-%, z.B. als physikalisch härtende Harze zugesetzt.

Als gegenbenenfalls vorhandene physikalisch trocknende Harze können z.B. bekannte Maleinatharze wie Alresat ^{R}KM 313, mit Kolophonium modifizierte Phenolharze wie Albertol ^{R}KP 626 (Hoechst), Keton-Formaldehydharze wie Kunstharz SK^{R}(Hüls) oder Ketonharz N^{R}(BASF) eingesetzt werden.

Um eine gleichmäßige Verteilung des physikalisch trocknenden Harzes im wäßrigen Polydienbindemittel, z.B. einem Polybutadienbindemittel, zu erreichen, wird das zusätzliche Harz vorteilhaft vor dem Lösen des Bindemittels in Wasser in die Harzschmelze oder die Harzlösung eingearbeitet. Dabei kann die Umsetzung von D mit dem Polydienöl in Gegenwart der zusätzlichen Harze erfolgen.

Weitere Bindemittel, die gegebenenfalls zusätzlich in Mengen von 0 bis 20 Gew.-% vorhanden sein können, sind wasserdispergierbare Polyurethan- oder Polyesterharze. Dieses sind bekannte Bindemittel, die über anionische Gruppen und/oder hydrophile nichtionische Gruppen in die Wasserphase überführt werden können. Solche Bindemittel werden beispielsweise in der EP-A-0 089 497, der EP-A-0 228 003 oder der EP-A-0 021 414 beschrieben.

Bei den erfindungsgemäß einsetzbaren Bindemitteln handelt es sich um solche, die nach Neutralisation mit z.B. organischen Basen in die Wasserphase überführt werden können. Sie sollen bevorzugt als wäßrige Bindemittellösung vorliegen. Unter Bindemittellösung sind dabei alle Lösungen und Dispersionen oder Emulsionen des Bindemittels in Wasser zu verstehen. Die Lösungen der Bindemittel sind im wesentlichen wäßrig, sie können gegebenenflals noch geringe Anteile organischer Lösungsmittel enthalten. Diese können aus der Herstellung der Bindemittel stammen oder sie werden später zum Einstellen von Lackeigenschaften, z.B. Verlauf, zugefügt.

Der Festkörper der wäßrigen Bindemittellösungen liegt bevorzugt bei 15 bis 60 Gew.-%. Die Viskosität der Bindemittel beträgt als 20 %ige wäßrige Lösung bevorzugt 10 bis 1000 mPas, besonders bevorzugt 20 bis 500. Es können gegebenenfalls Mischungen von Bindemitteln eingesetzt werden. Die ionischen Gruppen der Bindemittel sind bevorzugt zwischen 20 und 80 % neutralisiert.

Weiterhin enthalten die Spachtelmassen übliche Pigmente und Füllstoffe. Als Pigmente oder Füllstoffe sind beispielsweise Eisenoxid, Titandioxid, Bariumsulfat, Zinkoxid, Glimmer, Kaolin, Quarzmehl, Talkum und/oder verschiedene Arten von Kieselsäure möglich. Ebenso sind organische Farbpigmente möglich. Zusätzlich können Korrosionsschutzpigmente, wie Bleioxid, Bleisilikat oder Zinkphosphat, eingesetzt werden. Der Teilchendurchmesser der Pigmente soll bis zu 100 µm betragen. Ebenfalls ist es möglich zumindest anteilsweise vernetzte organische Füllstoffe einzusetzen, soweit diese die notwendige Kornfeinheit aufweisen und nicht in den verschiedenen Additiven anquellen.

Das Pigment-Füllstoff/Bindemittelverhältnis beträgt 0,5 bis 12,5 : 1 (ausgenommen 0,5-1,5 : 1), bevorzugt 1,0 bis 9,0 : 1 (augenommen 1,0 - 1,5 : 1) Dabei ist ein höherer Pigmentgehalt günstig für Eigenschaften wie Schleifbarkeit oder hohe Schichtdicke, andererseits steigt die Viskosität stark an. Über die Auswahl der Pigmente können Farbton, Dichte und Korrosionsschutzeigenschaften beeinflußt werden. Bevorzugt ist die Verwendung von 0,01 bis 5 % eines Korrosionsschutzpigmentes bezogen auf den Gesamtfestkörper in der Spachtelmasse. Besonders bevorzugt ist die Verwendung von chromatfreien Korrosionsschutzpigmenten.

Weiterhin kann die Spachtelmasse lacktechnische Additive enthalten, beispielsweise Katalysatoren, rheologiebeeinflussende Mittel; Antiabsetzmittel, Verlaufsmittel, Antischaummittel, wie beispielsweise silikonhaltige Verbindungen; Emulgatoren z.B. anionische oder kationische; Netzmittel sowie haftvermittelnde Substanzen. Unter Netzmittel werden auch bekannte Pastenharze verstanden, wie sie z.B. in der EP-A-0 260 447 beschrieben sind, die zum besseren Dispergieren und Vermahlen der Pigmente eingesetzt werden können. Zum Beschleunigen der Härtung können gegebenenfalls Katalysatoren eingesetzt werden. Ebenso sind geringe Mengen an Neutralisationsmittel im Überzugsmittel vorhanden.

Als Lösungsmittel, die in geringen Anteilen zum Beeinflussen von Verlauf oder Viskosität enthalten sein können, sind übliche lacktechnische Lösungsmittel geeignet; diese können auch von der Herstellung der Bindemittel stammen. Beispiele für solche Lösungsmittel sind ein- oder mehrwertige Alkohole, z.B. Propanol, Butanol, Hexanol; Glykolether oder - ester, z.B. Diethylenglykol-dimethylether, Ethoxypropanol, Butylglykol; Glykole z.B. Ethylenglykol; N-Methylpyrrolidon sowie Ketone wie Methylethyl-keton, Aceton, Cyclohexanon; aromatische oder aliphatische Kohlenwasserstoffe, z.B. Toluol, Xylol oder C₆ - C₁₂ lineare oder verzweigte aliphatische Kohlenwasserstoffe. Sie sollen nur in geringen Mengen vorhanden sein.

Die Spachtelmasse ist bevorzugt frei von niedermolekularen ungesättigten Monomeren, insbesondere soll sie kein Styrol enthalten.

Die Spachtelmasse weist einen Festkörper von 60 bis 85 Gew.-% mit Ausnahme von 60 Gew.-% auf. Der Anteil an Wasser beträgt zwischen 15 - 35 Gew.%. Die Lösungsmittelmenge liegt bei weniger als 5 Gew.-%. bezogen auf die gesamte Spachtelmasse.

Die Verfahren zur Herstellung von wäßrigen Spachtelmassen entsprechen den Verfahren zur Herstellung von konventionellen, lösungsmittelhaltigen Spachtelmassen. Beispielsweise wird von der wäßrigen Bindemitteldispersion ausgegangen, in die unter gutem Rühren Pigmente, Füllstoffe sowie Additive und Hilfsmittel zugegeben werden. Nach gründlicher Homogenisation wird die Mischung gegebenenfalls auf die notwendige Kornfeinheit vermahlen. Geeignete Mahlaggregate sind in der Literatur beschrieben. Nach dem Vermahlen des Überzugsmittels kann, falls erforderlich, mit weiteren, gegebenenfalls auch unterschiedlichen, Bindemitteln versetzt werden sowie weitere Additive zugegeben werden. Danach kann mit Wasser oder organischen Lösungsmittelanteilen auf eine geeignete Viskosität eingestellt werden. Ein Verfahren dieser Art ist in der EP-A-0 556 757 der gleichen Anmelderin beschrieben.

Die entstehenden Spachtelmassen sind hochviskose pastenförmige Massen. Sie sind lagerstabil und zeigen keine Sedimentation oder wesentliche Viskositätsveränderungen. Sie können durch Spachteln, Streichen oder Rakeln aufgetragen werden. Durch die geeignete Viskosität ist auch ein Auftragen von dicken Schichten möglich, z.B. bis zu mehreren Millimetern. Diese dicken Schichten sind nach dem Auftragen in der Form stabil und zeigen kein Ablaufen. Sie weisen eine schnelle Trocknung auf, auch in tieferen Schichten. Ebenfalls ist es möglich mehrere Spachtelschichten nacheinander aufzutragen, entweder nach kurzem Ablüften oder nach Trocknung des Spachtelüberzugs. Die Spachtelmasse enthält nur geringe Mengen an organischen Lösungsmitteln. Es treten daher keine Geruchsbelästigungen bei der Verarbeitung auf.

Der Einsatz kann als Einschicht- oder Dickschichtspachtel erfolgen. Die Spachtelmasse kann z.B. auf übliche Metall- oder Kunststoffuntergründe aufgetragen werden. Diese können gegebenenfalls grundiert oder lackiert sein, z.B. mit einer Haftgrundierung oder einer Korrosionsschutzgrundierung versehen sein. Nach dem Aufbringen der Spachtelschicht wird die Oberfläche geglättet und kann dann getrocknet werden. Dabei ist eine Trocknung durch erhöhte Temperatur möglich, bevorzugt wird jedoch bei Umgebungstemperatur gearbeitet. Die Trocknung kann von 20 min. bis 24 Stunden dauern. Sie wird von der Temperatur und den Katalysatoren beeinflußt. Sie ist ebenfalls von der Schichtdicke abhängig.

Nach dem Trocknen kann die Oberfläche mechanisch, z.B. durch Schleifen behandelt werden. Dabei wird eine besonders glatte und störungsfreie Oberfläche erzeugt. Danach werden weitere Schichten der Lackierung nach bekannten Verfahren aufgetragen. Dadurch werden Mehrschichtaufbauten erhalten. Beispiele für Folgeschichten sind Grundierung, Füller, Decklack oder Grundierung, Steinschlagschutzschicht, Basislack, Klarlack. Es können alle handelsüblichen Lackmaterialien eingesetzt werden, sowohl solche auf Wasserbasis als auch lösungsmittelhaltige Überzugsmittel. Dabei treten keine Wechselwirkungen mit dem Spachtelüberzug auf.

Die entstehenden Mehrschichtüberzüge weisen eine gute Elastizität auf. Sie zeigen eine gute Haftung zum Untergrund auch bei Belastung mit Feuchtigkeit. Es treten keine Korrosionserscheinungen am metallischen Untergrund auf. Die Oberfläche der erfindungsgemäß beschichteten Substrate ist glatt und homogen und zeigt ein gutes optisches Erscheinungsbild. Die gehärteten Spachtelschichten können gegebenenfalls durch Schleifen behandelt werden oder sie werden direkt überbeschichtt. Die Haftung zu den Nachfolgeschichten ist gut. Bevorzugte Anwendung finden die erfindungsgemäßen Spachtelmassen in der Fahrzeuglackierung, insbesondere in der Autoreparaturlackierung.

In den folgenden Beispielen beziehen sich Prozentangaben auf das Gewicht.

### Beispiel 1

Unter gutem Rühren werden folgende Rohstoffe homogen zusammengemischt. Es werden 45 % einer 30%igen Lösung eines Polybutadien-Styrol-Acrylsäure-Copolymerisates in Wasser (Bayhydrol B 130^{R}, Säurezahl ca. 70 - 80) mit 0,7 % handelsüblicher Sikkative auf Kobalt- und Manganbasis versetzt und mit 0,1 % eines Schwarzpigmentes sowie 2,2 % eines Gelbpigmentes und 10 % Titandioxid gemischt. Dazu werden 19,2 % Schiefermehl sowie 22 % Talkum untergerührt. Zu der Mischung werden 0,4 % eines handelsüblichen wäßrigen Verdickungsmittels (carboxylgruppenhaltiges Acrylsäureestercopolymeres) zugegeben. Nach guter Homogenisation wird die Masse auf einem Drei-Walzen-Stuhl vermahlen.

Festkörper 65 %; Pigment-Bindemittel-Verhältnis 4,5 : 1; Wassergehalt 32 %.

### Beispiel 2

Zu 27,2 % einer 30 %igen Lösung eines Polybutadien-Styrol-Acrylsäure-Copolymerisates in Wasser (Bayhydrol B 130^{R}) werden 0,5 % handelsüblicher Sikkative auf Basis Kobalt und Mangan, 0,6 % eines modifizierten Schichtsilikats (Bentone 34), 1,5 % eines Rotpigmentes auf Eisenoxidbasis sowie 0,5 % eines Schwarzpigments gemischt. Hierzu werden langsam 45,2 % eines Weißpigments auf Basis von ZnS und BaSO₄ (Lithopone) sowie 24,5 % Talkum eingerührt. Nach gründlichem Homogenisieren der Bestandteile der Spachtelmasse wird das Gemisch über einen Drei-Walzen-Stuhl vermahlen.

Festkörper 81 %; Pigment-Bindemittel-Verhältnis 8 : 1; Wassergehalt 18 %.

### Beispiel 3

Die nach Beispiel 1 hergestellten Spachtelmassen werden auf einem handelsüblichen unvorbehandelten Stahlblech aufgetragen. Die Schichtdicke beträgt etwa **300** µm. Die Schichten sind formstabil und laufen auch an senkrechten Flächen nicht ab. Die Trocknung erfolgt in 1 - 2 Stunden bei Raumtemperatur.

### Beispiel 4

Es wird wie in Beispiel 3 verfahren, jedoch die Spachtelmasse 2 in 200 µm Schichtdicke aufgetragen.

### Beispiel 5

Die nach Beispiel 1 hergestellte Spachtelmasse wird auf ein handelsübliches vorbehandeltes Stahlblech aufgetragen. Die Schichtdicke beträgt ca. 350 µm.

### Beispiel 6

Es wird wie in Beispiel 5 verfahren, jedoch die Spachtelmasse 2 in 200 µm Schichtdicke aufgetragen. Diese wird bei 40°C in einer Stunde getrocknet.

Die gespachtelten Flächen sind in getrocknetem Zustand schleifbar. Sie weisen eine gute Haftung zum Untergrund auf und eine gute Elastizität.

Nach dem Trocknen wird die Oberfläche geschliffen. Danach werden die Schichten der Beispiele 3 und 4 mit einer wasserverdünnbaren zweikomponenten (2K)-Grundierung auf Epoxidbasis, einem 2K-Polyurethanfüller und einem 2K-Decklack auf Polyurethanbasis überlackiert. Die Schichten der Beispiele 5 und 6 werden mit einer konventionelen 2K-Polyurethangrundierung, einem 2K-Füller auf Epoxidbasis, einem 1K-Basislack und einem 2K-Klarlack auf Polyurethanbasis überlackiert. Es entstehen jeweils glatte gut haftende Mehrschichtüberzüge.

Der gesamte Aufbau der Beispiele 3 bis 6 weist jeweils eine gute Elastizität und gute Haftung zum Untergrund auf.

## Patentansprüche

1. Verfahren zur Mehrschichtlackierung durch Auftrag einer Spachtelmasse auf ein Substrat, das bereits eine oder mehrere Überzugsschichten aufweisen kann, Trocknen und anschließenden Auftrag einer oder mehrerer Überzugsschichten, dadurch gekennzeichnet, daß man eine wäßrige Spachtelmasse aufträgt, die mindestens ein wasserverdünnbares olefinisch ungesättigtes Bindemittel, übliche Pigmente, Füllstoffe und Additive, entsprechend einem Festkörpergehalt von
60 - 85 Gew.-%, mit Ausnahme von 60 Gew.-%,
15-35 Gew.-% Wasser und
0 - 5 Gew.-% eines oder mehrerer organischer Lösemittel, enthält,
worin das Pigment-Füllstoff Bindemittel-Verhältnis 0,5 bis 12,5 : 1, ausgenommen 0,5 bis 1,5 : 1, bezogen auf das Festkörpergewicht beträgt und worin die wasserverdünnbaren olefinisch ungesättigten Bindemittel anionische Gruppen oder in anionische Gruppen überführbare Gruppen, entsprechend einer Säurezahl von 25-175 aufweisen und Umsetzungsprodukte sind von
A) 40 - 80 Gew.-% eines oder mehrerer Polydienöle,
B) 5 - 25 Gew.-% eines oder mehrerer anionische Gruppen oder in anionische Gruppen überführbare Gruppen enthaltender polymerisierbarer olefinisch ungesättigter Monomerer,
C) 0 - 10 Gew.-% eines oder mehrerer Bis-(2-oxazoline) und
D) 0 - 40 Gew.-% eines oder mehrerer ethylenisch ungesättigter Monomerer,
wobei sich die Gew.-% von A), B), C) und D) auf 100 Gew.-% addieren.

2. Verfahren nach Anspruch 1, dadurch gekennzeichnet, daß die wäßrige Spachtelmasse zusätzlich bis zu 20 Gew.-% eines oder mehrerer weiterer Bindemittel, bezogen auf das Gewicht der übrigen Komponenten, enthalten kann.

3. Verfahren nach einem der vorhergehenden Ansprüche mit einer wäßrigen Spachtelmasse, worin die wasserverdünnbaren, olefinisch ungesättigten Bindemittel ein Zahlenmittel der Molmasse von 300 - 50000 aufweisen.

4. Verfahren nach einem der vorhergehenden Ansprüche mit einer wäßrigen Spachtelmasse, worin das Polydienöl eine Iodzahl von 200 bis 500 g Iod/100g Substanz aufweist.

5. Verfahren nach einem der vorhergehenden Ansprüche mit einer wäßrigen Spachtelmasse, worin das Polydienöl mehr als 60 Gew.-% 1,4 cis-Polydien enthält.

6. Verfahren nach einem der vorhergehenden Ansprüche mit einer wäßrigen Spachtelmasse, worin die in anionische Gruppen überführbaren Gruppen Carboxylgruppen sind.

7. Verfahren nach einem der vorhergehenden Ansprüche mit einer wäßrigen Spachtelmasse, worin die Monomeren der Komponente B ein oder mehrere α,β-ungesättigte Monocarbonsäuren und/oder Anhydride, Halbamide und/oder Halbester von α,β-ungesättigten Dicarbonsäuren sind.

8. Verfahren nach einem der vorhergehenden Ansprüche mit einer wäßrigen Spachtelmasse, worin die ethylenisch ungesättigten Monomeren der Komponente D Vinyl-, Vinyliden-, Acryl- oder Methacrylverbindungen sind.

9. Verfahren nach einem der vorhergehenden Ansprüche mit einer wäßrigen Spachtelmasse, dadurch gekennzeichnet, daß das Bindemittel ringgeöffnete Bis(-2-oxazoline) enthält.

10. Verfahren nach einem der vorhergehenden Ansprüche mit einer wäßrigen Spachtelmasse, dadurch gekennzeichnet, daß sie kein monomeres Styrol enthält.

11. Verfahren nach einem der vorhergehenden Ansprüche mit einer wäßrigen Spachtelmasse, die mindestens ein Korrosionsschutzpigment enthält.

12. Verwendung einer wäßrigen Zusammensetzung, die mindestens ein wasserverdünnbares olefinisch ungesättigtes Bindemittel, übliche Pigmente, Füllstoffe und Additive, entsprechend einem Festkörpergehalt von
60 - 85 Gew.-%, mit Ausnahme von 60 Gew.-%,
15 - 35 Gew.-% Wasser und
0 - 5 WGew.-% eines oder mehrerer organischer Lösemittel, enthält,
worin das Pigment-Füllstoff Bindemittel-Verhältnis 0,5 bis 12,5 : 1, ausgenommen 0,5 bis 1,5 : 1, bezogen auf das Festkörpergewicht beträgt und worin die wasserverdünnbaren olefinisch ungesättigten Bindemittel anionische Gruppen oder in anionische Gruppen überführbare Gruppen, entsprechend einer Säurezahl von 25-175 aufweisen und Umsetzungsprodukte sind von
A) 40 - 80 Gew.-% eines oder mehrerer Polydienöle,
B) 5 - 25 Gew.-% eines oder mehrerer anionische Gruppen oder in anionische Gruppen überführbare Gruppen enthaltender polymerisierbarer olefinisch ungesättigter Monomerer,
C) 0 - 10 Gew.-% eines oder mehrerer Bis-(2-oxazoline) und
D) 0 - 40 Gew.-% eines oder mehrerer ethylenisch ungesättigter Monomerer,
wobei sich die Gew.-% von A), B), C) und D) auf 100 Gew.-% addieren, als Spachtelmasse.

13. Verwendung nach Anspruch 12, als Spachtelmasse bei der Mehrschichtlackierung.

14. Verwendung der wäßrigen Spachtelmassen nach einem der Ansprüche 1 bis 11 zur Mehrschichtlackierung, insbesondere von Kraftfahrzeugen.

15. Verwendung der wäßrigen Spachtelmassen nach einem der Ansprüche 1 bis 11 bei der Reparaturlackierung von Kraftfahrzeugen.

## Claims

1. A process for multi-layer coating by the application of a stopper composition to a substrate which may already comprise one or more coating layers, drying, and subsequently applying one or more coating layers, characterised in that an aqueous stopper composition is applied which contains at least one water-thinnable, olefinically unsaturated binder vehicle, customary pigments, extenders and additives, corresponding to a solids content of
60 - 85 % by weight, with the exception of 60 % by weight,
15 - 35 % by weight water and
0 - 5 % by weight of one or more organic solvents,
wherein the pigment-extender/binder vehicle ratio is 0.5 to 12.5 : 1, with the exception of 0.5 to 1.5 : 1, with respect to the weight of solids, and wherein the water-thinnable olefinically unsaturated binder vehicles comprise anionic groups or groups which can be converted into anionic groups, corresponding to an acid number of 25-175, and are reaction products of
A) 40 - 80 % by weight of one or more polydiene oils,
B) 5 - 25 % by weight of one or more polymerisable, olefinically unsaturated monomers which contain anionic groups or groups which can be converted into anionic groups,
C) 0 - 10 % by weight of one or more bis-(2-oxazolines), and
D) 0 - 40 % by weight of one or more ethylenically unsaturated monomers,
wherein the percentages by weight of A), B), C) and D) add up to 100 % by weight.

2. A process according to claim 1, characterised in that the aqueous stopper composition may additionally contain up to 20 % by weight of one or more further binder vehicles with respect to the weight of the other components.

3. A process according to either one of the preceding claims comprising an aqueous stopper composition, wherein the water-thinnable, olefinically unsaturated binder vehicles have a number average molecular weight of 300 - 50,000.

4. A process according to any one of the preceding claims comprising an aqueous stopper composition, wherein the polydiene oil has an iodine number of 200 to 500 g iodine/100 g substance.

5. A process according to any one of the preceding claims comprising an aqueous stopper composition, wherein the polydiene oil contains more than 60 % by weight of 1,4-cis-polydiene.

6. A process according to any one of the preceding claims comprising an aqueous stopper composition, wherein the groups which can be converted into anionic groups are carboxyl groups.

7. A process according to any one of the preceding claims comprising an aqueous stopper composition, wherein the monomers of component B are one or more α,β-unsaturated monocarboxylic acids and/or anhydrides, semi-amides and/or semi-esters of α,β-unsaturated dicarboxylic acids.

8. A process according to any one of the preceding claims comprising an aqueous stopper composition, wherein the ethylenically unsaturated monomers of component D are vinyl, vinylidene, acrylic or methacrylic compounds.

9. A process according to any one of the preceding claims comprising an aqueous stopper composition, characterised in that the binder vehicle contains ring-opened bis(-2-oxazolines).

10. A process according to any one of the preceding claims comprising an aqueous stopper composition. characterised in that the stopper composition contains no monomeric styrene.

11. A process according to any one of the preceding claims comprising an aqueous stopper composition which contains at least one anti-corrosion pigment.

12. The use, as a stopper composition, of an aqueous composition which contains at least one water-thinnable, olefinically unsaturated binder vehicle, customary pigments, extenders and additives, corresponding to a solids content of
60 - 85 % by weight, with the exception of 60 % by weight,
15 - 35 % by weight water and
0 - 5 % by weight of one or more organic solvents,
wherein the pigment-extender/binder vehicle ratio is 0.5 to 12.5 : 1, with the exception of 0.5 to 1.5 : 1, with respect to the weight of solids. and wherein the water-thinnable olefinically unsaturated binder vehicles comprise anionic groups or groups which can be converted into anionic groups, corresponding to an acid number of 25-175, and are reaction products of
A) 40 - 80 % by weight of one or more polydiene oils,
B) 5 - 25 % by weight of one or more polymerisable, olefinically unsaturated monomers which contain anionic groups or groups which can be converted into anionic groups,
C) 0 - 10 % by weight of one or more bis-(2-oxazolines), and
D) 0 - 40 % by weight of one or more ethylenically unsaturated monomers,
wherein the percentages by weight of A), B), C) and D) add up to 100 % by weight.

13. A use according to claim 12 as a stopper composition in multi-layer coating.

14. A use of the aqueous stopper compositions according to any one of 1 to 11 for multi-layer coating, particularly of motor vehicles.

15. A use of the aqueous stopper compositions according to any one of claims 1 to 11 for the coating of motor vehicles for repair purposes.

## Revendications

1. Procédé pour l'application de revêtements à plusieurs couches par application d'un mastic sur un support qui peut déjà porter une ou plusieurs couches de revêtement, séchage et application subséquente d'une ou plusieurs couches de revêtement, caractérisé en ce que l'on applique un mastic aqueux contenant au moins un liant à insaturation oléfinique diluable à l'eau, des pigments, matières de charge et additifs usuels, en quantités correspondant à une teneur en matières solides de
60 à 85 % en poids, à l'exception de 60 % en poids, avec
15 à 35 % en poids d'eau et
0 à 5 % en poids d'un ou plusieurs solvants organiques,
le rapport pigment-matière de charge/liant allant de 0,5 à 12,5 : 1, à l'exception de 0,5 à 1,5 : 1, sur le poids des matières solides, et dans lequel les liants à insaturation oléfinique diluables à l'eau portent des groupes anioniques ou des groupes convertibles en groupes anioniques en quantité correspondant à un indice d'acide de 25 à 175, et sont des produits de réaction de
A) 40 à 80 % en poids d'une ou plusieurs huiles de polydiènes,
B) 5 à 25 % en poids de monomères à insaturation oléfinique polymérisables contenant des groupes anioniques ou des groupes convertibles en groupes anioniques,
C) 0 à 10 % en poids d'une ou plusieurs bis-(2-oxazolines) et
D) 0 à 40 % en poids d'un ou plusieurs monomères à insaturation éthylénique,
les pourcentages en poids de A), B), C) et D) se complétant à 100 % en poids.

2. Procédé selon revendication 1, caractérisé en ce que le mastic aqueux peut contenir en outre jusqu'à 20 % en poids d'un ou plusieurs autres liants, par rapport au poids des autres composants.

3. Procédé selon une des revendications qui précèdent, avec un mastic aqueux dans lequel les liants à insaturation oléfinique diluables à l'eau ont une masse moléculaire moyenne, moyenne en nombre, de 300 à 50 000.

4. Procédé selon une des revendications qui précèdent, avec un mastic aqueux dans lequel l'huile de polydiène a un indice d'iode de 200 à 500 g d'iode/100 g de substance.

5. Procédé selon une des revendications qui précèdent, avec un mastic aqueux dans lequel l'huile de polydiène contient plus de 60 % en poids de 1,4-cis-polydiène.

6. Procédé selon une des revendications qui précèdent, avec un mastic aqueux dans lequel les groupes convertibles en groupes anioniques sont des groupes carboxyle.

7. Procédé selon une des revendications qui précédent, avec un mastic aqueux dans lequel les monomères du composant B) consistent en un ou plusieurs acides monocarboxyliques α, β-insaturés et/ou anhydrides, hémiamides et/ou hémiesters d'acides dicarboxyliques α,β-insaturés.

8. Procédé selon une des revendications qui précèdent, avec un mastic aqueux dans lequel les monomères à insaturation éthylénique du composant D) sont des dérivés vinyliques, vinylidéniques, acryliques ou méthacryliques.

9. Procédé selon une des revendications qui précédent, avec un mastic aqueux caractérisé en ce que le liant contient des bis-(2-oxazolines) à cycles ouverts.

10. Procédé selon une des revendications qui précèdent, avec un mastic aqueux, caractérisé en ce que celui-ci ne contient pas de styrène monomère.

11. Procédé selon une des revendications qui précèdent, avec un mastic aqueux contenant au moins un pigment protégeant contre la corrosion.

12. Utilisation d'une composition aqueuse contenant au moins un liant à insaturation oléfinique diluable à l'eau, des pigments, des matières de charge et additifs usuels, en quantités correspondant à une teneur en matières solides de
60 à 85 % en poids, à l'exception de 60 % en poids, avec
15 à 35 % en poids d'eau, et
0 à 5 % en poids d'un ou plusieurs solvants organi-
ques, dans laquelle le rapport pigment-matière de charge/liant va de 0,5 à 12,5 : 1, à l'exception de 0,5 à 1,5 : 1, sur le poids des matières solides, et dans laquelle les liants à insaturation oléfinique diluables à l'eau contiennent des groupes anioniques ou des groupes convertibles en groupes anioniques en quantité correspondant à un indice d'acide de 25 à 175 et sont des produits de réaction de
A) 40 à 80 % en poids d'une ou plusieurs huiles de polydiènes,
B) 5 à 25 % en poids d'un ou plusieurs monomères à insaturation oléfinique polymérisables contenant des croupes anioniques ou des groupes convertibles en groupes anioniques,
C) 0 à 10 % en poids d'une ou plusieurs bis-(2-oxazolines) et
D) 0 à 40 % en poids d'un ou plusieurs monomères à insaturation éthylénique,
les pourcentages en poids de A), B), C) et D) se complétant à 100 % en poids, en tant que mastic.

13. Utilisation selon revendication 12, en tant que mastic à l'application de revêtements à plusieurs couches.

14. Utilisation des mastics aqueux selon l'une des revendications 1 à 11 pour l'application de revêtements à plusieurs couches, en particulier sur des véhicules.

15. Utilisation des mastics aqueux selon une des revendications 1 à 11 pour l'application de revêtements sur des véhicules après réparation.
